(19) Europäisches Patentamt
European Patent Office
Office européen des brevets

(11) **EP 4 668 196 A1**

(12) **EUROPEAN PATENT APPLICATION**

(43) Date of publication:
**24.12.2025 Bulletin 2025/52**

(21) Application number: **25181296.2**

(22) Date of filing: **06.06.2025**

(51) International Patent Classification (IPC):
**G06Q 40/06** *(2012.01)* **G06Q 50/18** *(2012.01)*

(52) Cooperative Patent Classification (CPC):
**G06Q 50/184; G06Q 40/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.06.2024 JP 2024100031**

(71) Applicant: **Alps Alpine Co., Ltd.
Tokyo 145-8501 (JP)**

(72) Inventors:
• **ITOH, Akihisa
Tokyo, 145-8501 (JP)**
• **NAKAMURA, Maki
Tokyo, 145-8501 (JP)**

(74) Representative: **Maiwald GmbH
Engineering
Elisenhof
Elisenstrasse 3
80335 München (DE)**

(54) **INFORMATION PROCESSING APPARATUS, INFORMATION PROCESSING METHOD, AND RECORDING MEDIUM STORING PROGRAM**

(57)     An information processing apparatus (100) includes an analyzer (110) that analyzes the relationship between a price book-value ratio and a patent portfolio for a processing target company in a predetermined period of time based on information on the price book-value ratio of the company and information on patents of the company, and an output processor (112) that outputs an analysis result of the relationship.

# FIG. 1

START

ANALYZE RELATIONSHIP BETWEEN PBR AND PATENT PORTFOLIO OF PROCESSING TARGET COMPANY IN PREDETERMINED PERIOD OF TIME BASED ON INFORMATION ON PBR AND INFORMATION ON PATENTS — S100

OUTPUT RESULT OF ANALYSIS OF RELATIONSHIP BETWEEN PBR AND PATENT PORTFOLIO IN PREDETERMINED PERIOD OF TIME — S102

END

**Description**

BACKGROUND OF THE INVENTION

1. Field of the Invention

The present invention relates to an information processing apparatus, an information processing method, and a recording medium storing a program.

2. Description of the Related Art

For example, Japanese Unexamined Patent Application Publication No. 2002-015108 discloses a technique for calculating various financial index values based on past financial statement data disclosed by a company.

"Price book-value ratio" (hereinafter referred to as "PBR" where appropriate) is one of the representative indicators for evaluating corporate values and stock prices. PBR is used to determine whether a stock is undervalued or overvalued, to determine a value of a company, or to make an investment decision for the company. As mentioned above, PBR is one of the useful indicators for analyzing a company, but it is not a sufficient indicator alone for analysis.

SUMMARY OF THE INVENTION

The present disclosure proposes a novel and improved information processing apparatus, a novel and improved information processing method, and a novel and improved program that can analyze companies.

According to an aspect of the present disclosure, an information processing apparatus includes an analyzer that analyzes the relationship between a price book-value ratio and a patent portfolio for a processing target company in a predetermined period of time based on information on the price book-value ratio of the company and information on patents of the company, and an output processor that outputs an analysis result of the relationship.

According to another aspect of the present disclosure, an information processing method includes analyzing the relationship between a price book-value ratio and a patent portfolio for a processing target company in a predetermined period of time based on information on the price book-value ratio of the company and information on patents of the company, and outputting an analysis result of the relationship.

According to a further aspect of the present disclosure, a recording medium stores a program that causes a computer to realize a function of analyzing the relationship between a price book-value ratio and a patent portfolio for a processing target company in a predetermined period of time based on information on a price book-value ratio of the company and information on patents of the company, and a function of outputting the analysis results of the above relationship.

According to the present disclosure, companies can be analyzed.

Note that the above effects are not necessarily limiting, and any of the effects illustrated herein or other effects that may be ascertained from this specification may be achieved together with or instead of the above effects.

BRIEF DESCRIPTION OF THE DRAWINGS

Fig. 1 is a diagram illustrating an example of a process related to an information processing method according to this embodiment;
Fig. 2 is a diagram illustrating examples of analysis results according to this embodiment;
Fig. 3 is a diagram illustrating examples of analysis results according to this embodiment;
Fig. 4 is a diagram illustrating examples of analysis results according to this embodiment;
Fig. 5 is a diagram illustrating examples of analysis results according to this embodiment;
Fig. 6 is a diagram illustrating examples of analysis results according to this embodiment;
Fig. 7 is a diagram illustrating examples of analysis results according to this embodiment;
Fig. 8 is a diagram illustrating examples of analysis results according to this embodiment;
Fig. 9 is a diagram illustrating examples of analysis results according to this embodiment;
Fig. 10 is a diagram illustrating examples of analysis results according to this embodiment;
Fig. 11 is a diagram illustrating examples of analysis results according to this embodiment;
Fig. 12 is a diagram illustrating examples of analysis results according to this embodiment;
Fig. 13 is a block diagram illustrating an example of a configuration of an information processing apparatus according to this embodiment; and

Fig. 14 is a block diagram illustrating an example of a hardware configuration of the information processing apparatus according to this embodiment.

DESCRIPTION OF THE PREFERRED EMBODIMENTS

A preferred embodiment of the present disclosure will be described hereinafter in detail with reference to the accompanying drawings. Note that, in this specification and the drawings, duplicate explanations of components having substantially identical functional configurations are omitted by applying the same symbols.

Information Processing Method According to This Embodiment

First, an information processing method according to this embodiment capable of analyzing companies will be described. In the following, the information processing method according to this embodiment will be described using a case in which the information processing apparatus according to this embodiment performs processes related to the information processing method according to this embodiment as an example.

As mentioned above, PBR is one of the useful indicators for analyzing a company. Here, PBR is calculated by Formula 1 below using, for example, a "stock price" and "Book-value Per Share" (hereinafter referred to as "BPS"). One of the determinants of a stock price used to calculate PBR is the expectation of future earnings of the company.

$$PBR = (Stock\ Price)/(BPS)\ \ ...\ \ (Formula\ 1)$$

Furthermore, BPS is acquired, for example, by dividing net assets by the number of shares outstanding, as illustrated in Formula 2 below. Here, the larger a value of BPS is, the more stable the company is evaluated.

$$BPS = (Net\ assets)/(Number\ of\ shares\ outstanding)$$

$$...\ \ (Formula\ 2)$$

Although PBR is one of the useful indicators for analyzing a company, it is not a sufficient indicator alone for analysis as mentioned above.

Therefore, the information processing apparatus of this embodiment analyzes the relationship between PBR of a target company and a patent portfolio at the company.

Here, the patent portfolio in this embodiment indicates, for example, the number of patent applications held by the company, the number of patents held by the company, or the number of patent applications and patents held by the company. The patent portfolio according to this embodiment is also referred to as a patent network. In other words, a patent portfolio of a company in this embodiment can be expressed, for example, as one or both of the number of patent applications filed by the company and the number of patents owned by the company.

The number of patent applications in this embodiment may be, for example, the number of patent applications in a set country or region, such as Japan, the U.S., or Europe, or the total number of these patent applications. Countries and regions may be predetermined or selected and set by the user. Note that the number of patent applications of this embodiment is not limited to the above. For example, the number of patent applications of this embodiment may be the number of patent family involved in a patent application. The patent family involved in a patent application according to this embodiment is a bundle of patent applications which are applied in several countries or regions and which are linked by a priority right. When the number of patent applications according to this embodiment is the number of patent family involved in a patent application, it is possible to avoid duplicate counts of patent applications linked by a priority right. Furthermore, when the number of patent applications according to this embodiment is the number of patent family involved in a patent application, the number of patent family involved in the patent application may be used for analysis that is not limited to any country or region.

Furthermore, the number of patents according to this embodiment may be, for example, the number of patents in a set country or region, such as Japan, the U.S., or Europe, or the total number of these patents. Countries and regions may be predetermined or selected and set by the user. Note that the number of patents according to this embodiment is not limited to the above. For example, the number of patents according to this embodiment may be the number of patent family involved in a patent. The patent family involved in a patent according to this embodiment is a bundle of patents which are applied in several countries or regions and which are linked by a priority right. When the number of patents according to this embodiment is the number of patent family involved in a patent, it is possible to avoid duplicate counts of patents linked by a priority right. When the number of patents according to this embodiment is the number of patent family involved in a patent, the number of patent family involved in the patent may be used for analysis that is not limited to any country or region.

Filing a patent application, acquiring a patent application, and maintaining a patent after it has been granted are costly. Therefore, one or both the number of patent applications and the number of patents held by a company may be used as an indicator to determine, for example, how much the company invests in intellectual property.

The analysis of the relationship between PBR of a company and a patent portfolio in the company corresponds, for example, to analysis of the relationship between PBR and investment in intellectual property in the company. In other words, the information processing apparatus of this embodiment can perform the analysis by analyzing the relationship between PBR of the company and the patent portfolio at the company for the target company, while associating the PBR with a degree of the investment efficiency.

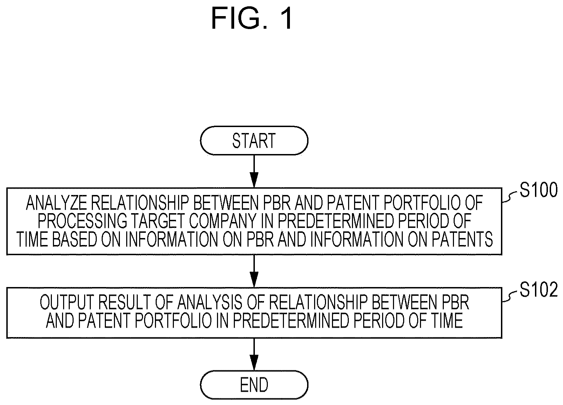

The following is a more specific description of the processing involved in the information processing method according to this embodiment. Fig. 1 is a diagram illustrating an example of a process related to the information processing method according to this embodiment.

The information processing apparatus according to this embodiment analyzes the relationship between a price book-value ratio (PBR) and a patent portfolio for a processing target company in a predetermined period of time based on information on the price book-value ratio of the company and information on patents of the company (S100: analysis process).

Here, the information on a price book-value ratio is, for example, data that can be used to identify PBR. Examples of information on a price book-value ratio include data that directly indicates PBR, such as data indicating PBR or data including PBR.

Note that the information on a price book-value ratio is not limited to the above. For example, the information on a price book-value ratio may be data from which PBR can be determined, i.e., data that indirectly indicates PBR. Examples of data from which PBR can be determined include stock price data and financial results data, and stock price data and data indicating BPS.

The information on a price book-value ratio is stored, for example, in a recording medium. In this case, the information processing apparatus according to this embodiment acquires and processes the information on a price book-value ratio by reading the information on a price book-value ratio from the recording medium. Here, the recording medium storing the information on a price book-value ratio may be provided by the information processing apparatus according to this embodiment, or may be a recording medium external to the information processing apparatus.

The information processing apparatus of this embodiment acquires, for example, information on a price book-value ratio corresponding to a predetermined period of time. The information on a price book-value ratio corresponding to a predetermined period of time includes, for example, information on a latest price book-value ratio in the predetermined period of time. Note that the information processing apparatus according to this embodiment may acquire information on a latest price book-value ratio regardless of the predetermined period of time.

The method for acquiring information on a price book-value ratio according to this embodiment is not limited to the examples illustrated above. For example, the information processing apparatus according to this embodiment may acquire information on a price book-value ratio by communicating with an external device via a network (or directly). Here, examples of the network in this embodiment include a wired network, such as a local area network (LAN) or a wide area network (WAN), a wireless network, such as a wireless local area network (WLAN) or a wireless wide area network (WWAN), and the Internet using a communication protocol, such as TCP/IP (Transmission Control Protocol/Internet Protocol).

When the information on a price book-value ratio is acquired via communication, the information on a price book-value ratio may be acquired actively or passively. Examples of the active acquisition of information on a price book-value ratio in the information processing apparatus according to this embodiment include communication for acquisition based on a user's operation and communication for acquisition at a predetermined timing, such as a timing of an announcement of financial results. Examples of the passive acquisition of information on a price book-value ratio in the information processing apparatus according to this embodiment include a reception, by the information processing apparatus according to this embodiment, of information on a price book-value ratio transmitted from an external device (or an external program).

Information on patents according to this embodiment is, for example, data that can be used to identify a company's patent portfolio. Examples of the information on patents according to this embodiment include data directly indicating at least one of the number of patent applications and the number of patents, such as data indicating at least one of the number of patent applications and the number of patents and data including at least one of the number of patent applications and the number of patents.

Note that the information on patents according to this embodiment is not limited to the above. For example, the information on patents according to this embodiment may be data that allows at least one of the number of patent applications and the number of patents to be calculated indirectly. Examples of the data that allows at least one of the number of patent applications and the number of patents to be calculated indirectly include database data of the patent applications and database data of the patents.

The information on patents is stored, for example, in a recording medium. In this case, the information processing apparatus according to this embodiment reads the information on patents stored in the recording medium from the recording medium and then acquires and processes the information on patents. The information processing apparatus according to this embodiment reads, for example, the information on patents that satisfy a set condition from the recording medium. The condition for acquiring the information on patents according to this embodiment may be a pre-set condition or a condition set by a user. The condition for acquiring the information on patents is, for example, one or both of the following: a condition regarding states, such as a condition for setting a state of a patent application pending before the Office or a state of a patent life, and a condition regarding a scope of analysis, such as a condition for setting a country or a region to be analyzed or a condition for setting a patent family to be analyzed. By setting a condition for setting a state of a patent application pending before the Office, it is possible, for example, to perform analysis that includes patent applications that have not been granted, or to perform analysis that does not include patent applications that have not been granted but only patent applications that are still pending before the Office. In addition, by setting a condition for a state of patent life, it is possible to perform analysis that includes patents whose rights have been invalidated, or analysis that does not include patents whose rights have been invalidated but uses only patents whose rights are valid. In addition, by setting a condition regarding a scope of an analysis target, for example, country- or region-specific analysis or exhaustive analysis targeting a patent family can be performed. The condition pertaining to the acquisition of information on patents according to this embodiment is not limited to the examples illustrated above. For example, the condition regarding acquisition of information on patents may include a condition regarding a setting of a processing target company. A method of setting a target company according to this embodiment is described below.

Here, the recording medium storing the information on patents may be included in the information processing apparatus according to this embodiment, or may be external to the information processing apparatus according to this embodiment. Furthermore, the recording medium storing the information on patents may be the same as or different from the recording medium storing the information on a price book-value ratio.

The method for acquiring the information on patents is not limited to the examples illustrated above. For example, the information processing apparatus may acquire the information on patents by communicating with an external device via a network (or directly).

When the information on patents is acquired via communication, the information on patents may be acquired actively or passively. Examples of active acquisition of the information on patents in the information processing apparatus according to this embodiment include communication for acquisition based on a user's operation. When active acquisition of the information on patents is performed, the information processing apparatus according to this embodiment, for example, transmits a signal including a condition for the acquisition of the information on patents and a transmission request to an external device (or an external program). In this case, the information processing apparatus according to this embodiment can receive, for example, the information on patents that satisfies the condition to be set transmitted from the external device (or external program). Furthermore, examples of passive acquisition of the information on patents in the information processing apparatus of this embodiment include a reception, by the information processing apparatus of this embodiment, of the information on patents transmitted from the external device (or the external program).

The processing target company in this embodiment is set, for example, when the user selects the company to be processed. There may be one or more target companies.

When one target company is set, the analysis is performed for the set one target company, and as a result, PBR for the one target company and a degree of investment efficiency of the company which are associated are analyzed, for example.

When a plurality of target companies are set, the analysis is performed for the plurality of set target companies, and as a result, PBRs of the target companies and degrees of investment efficiencies of the companies which are associated for individual companies are analyzed, for example. Furthermore, when a plurality of target companies are set, validity of analysis results can be further determined by examining the correlation of the analysis results of the individual target companies.

Note that a method for setting a target company according to this embodiment is not limited to the examples illustrated above. For example, when target companies are pre-grouped, the target companies may be set by the user selecting the group. Examples of grouping of target companies include grouping by securities code or by industry. Note that the examples of grouping of target companies are not limited to the above, but grouping may be performed from any perspective.

The predetermined period of time in this embodiment is used, for example, to determine information on patents to be used in analysis. To give an example, when three years is set as the predetermined period of time, the information processing apparatus according to this embodiment identifies information on patents corresponding to a period of time three years back from a time of analysis, and uses the identified information on patents for processing. Note that, in the above, the case where three years is set as the predetermined period of time is given as an example, but the same applies when other periods of time are set as the predetermined period of time as described below.

When, as in the example illustrated above, a period of time going back from the time of analysis is set as the predetermined period of time, the number of patent applications in a period of time closest to the time of analysis or the number of patents in the period of time closest to the time of analysis is used in the analysis. In other words, when a period of time going back from the time of analysis is set as the predetermined period of time, a result of the analysis corresponds to looking at "novelty" in terms of the number of patent applications or the number of patents.

The predetermined period of time according to this embodiment is, for example, a predetermined fixed period of time. A fixed period of time may be, for example, three or five years, corresponding to a company's mid-term plan.

Note that the predetermined period of time according to this embodiment is not limited to the examples illustrated above. For example, another example of a predetermined period of time of this embodiment is, for example, a variable period of time set by the user. By making the predetermined period of time variable, different periods of time may be set for the same target company for conducting the analysis. Examples of the variable period of time include a period of time specified as "8 years" and a period of time specified as a time of termination, such as "8 years ago or earlier". Note that the examples of the variable period of time are apparently not limited to those illustrated above.

Furthermore, the predetermined period may be, for example, a period of time set in accordance with the information on a price book-value ratio. As an example of the predetermined period of time set in accordance with the information on a price book-value ratio, the predetermined period of time is dynamically set in accordance with a period of time corresponding to a company's mid-term plan, which is included in the information on a price book-value ratio.

Note that, when there is more than one target company, there may be more than one period corresponding to a mid-term plan. In this case, when the predetermined period of time is set in accordance with the information on a price book-value ratio, the information processing apparatus of this embodiment, for example, selects one of candidates of the predetermined period of time corresponding to the target companies, and sets the selected period of time as the predetermined period of time. For example, the information processing apparatus of this embodiment sets one of the candidates of the predetermined period of time with the largest number of target companies corresponding to the individual candidates in the predetermined period of time as the predetermined period of time. Note that the method for setting the predetermined period of time in the above case is apparently not limited to the example illustrated above.

The information processing apparatus analyzes the relationship between PBR and the patent portfolio in the predetermined period of time for the processing target company, based on, for example, the above information on a price book-value ratio and the information on patents.

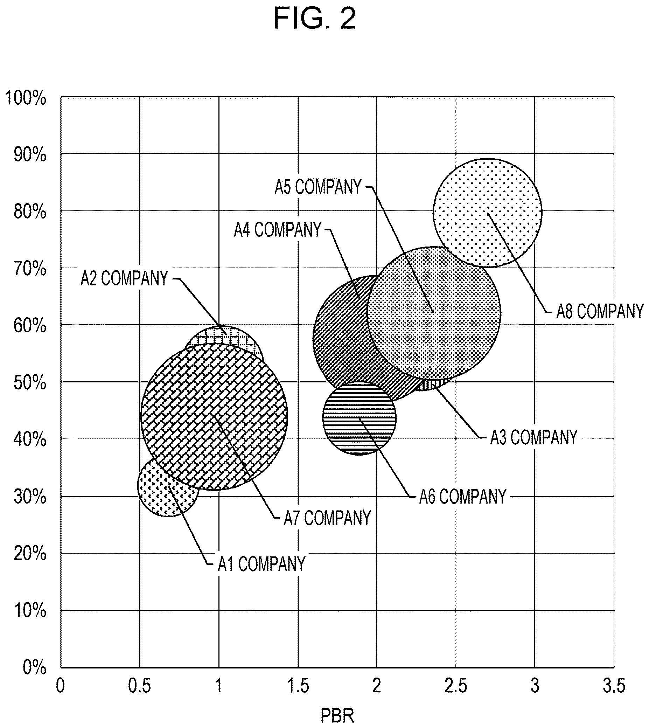

Figs. 2 to12 are diagrams individually illustrating examples of analysis results according to this embodiment. In Figs. 2 to 12, examples of analysis results obtained when a plurality of target companies are set are illustrated. As illustrated in Figs. 2 to 12, the analysis results are represented, for example, by "a graph in which a ratio of the number of patent applications in a predetermined period of time to the number of valid patent applications and PBR are represented on two axes". Note that the analysis results are not limited to the above. For example, the analysis results may be represented by "a graph in which a ratio of the number of patents in a predetermined period of time to the number of valid patents and PBR are represented on two axes".

(1) First Example of Analysis Results (Fig. 2)

A first example of the analysis results illustrated in Fig. 2 is obtained when eight companies A1 to A8 in the electronic components industry are target companies and the predetermined period of time is five years. In the analysis results illustrated in Fig. 2, a correlation coefficient is 0.83. That is, the analysis results illustrated in Fig. 2 indicate that "there is a strong correlation between the ratio of the number of patent applications in the predetermined period of time to the number of valid patent applications and PBR" in the electronic components industry.

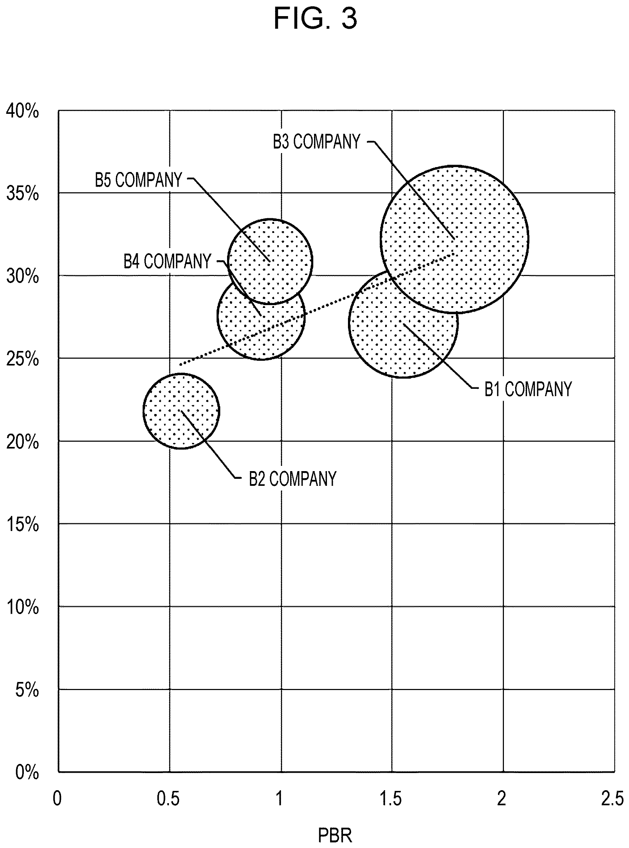

(2) Second Example of Analysis Results (Fig. 3)

A second example of analysis results illustrated in Fig. 3 is obtained when five companies B1 to B5 in the multifunction device industry are determined as target companies and the predetermined period of time is five years. In the analysis results illustrated in Fig. 3, a correlation coefficient is 0.68. That is, the analysis results illustrated in Fig. 3 indicate that "there is a strong correlation between the ratio of the number of patent applications in the predetermined period of time to the number of valid patent applications and PBR" in the multifunction device industry.

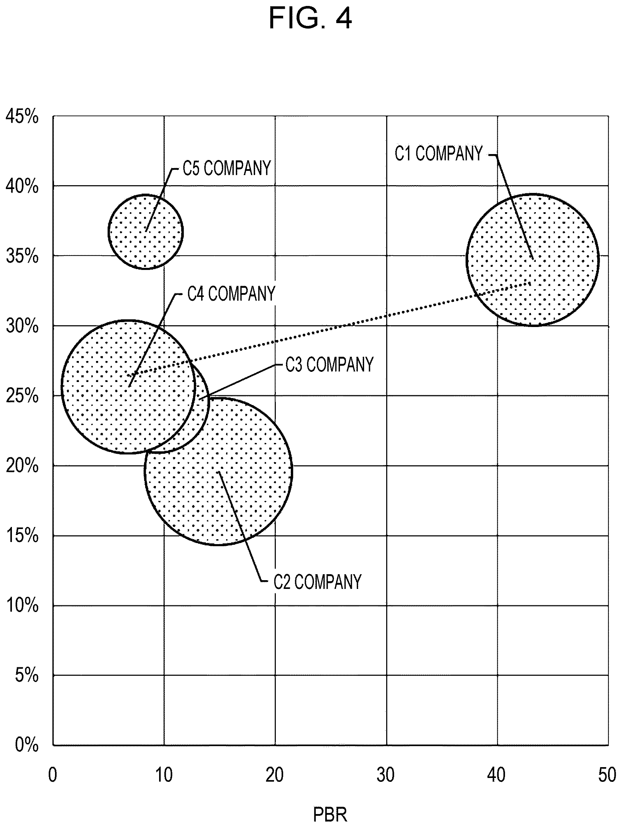

(3) Third Example of Analysis Results (Fig. 4)

A third example of analysis results illustrated in Fig. 4 is obtained when five companies, C1 to C5, belonging to different industries, are the target companies and the predetermined period of time is five years. In the analysis results illustrated in Fig. 4, a correlation coefficient is 0.38. That is, the analysis results illustrated in Fig. 4 indicate that "the correlation between the ratio of the number of patent applications in the predetermined period of time to the number of valid patent applications and PBR is weak" when different target companies are in different industries.

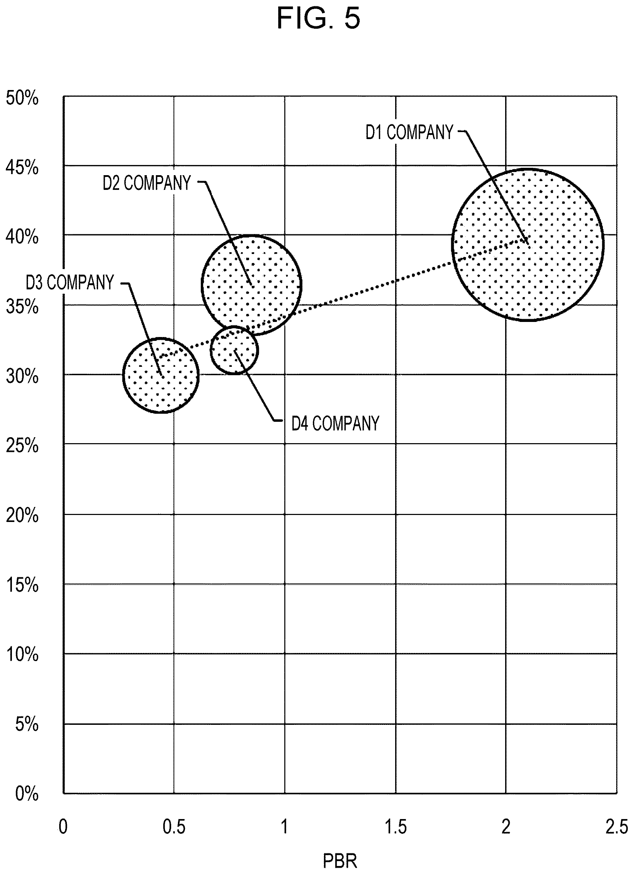

(4) Fourth Example of Analysis Results (Fig. 5)

A fourth example of analysis results illustrated in Fig. 5 is obtained when four companies D1 to D4 in the automobile industry are determined as target companies and the predetermined period of time is five years. In the analysis results illustrated in Fig. 5, a correlation coefficient is 0.88. That is, the analysis results illustrated in Fig. 5 indicate that "there is a strong correlation between the ratio of the number of patent applications in the predetermined period of time to the number of valid patent applications and PBR" in the automobile industry.

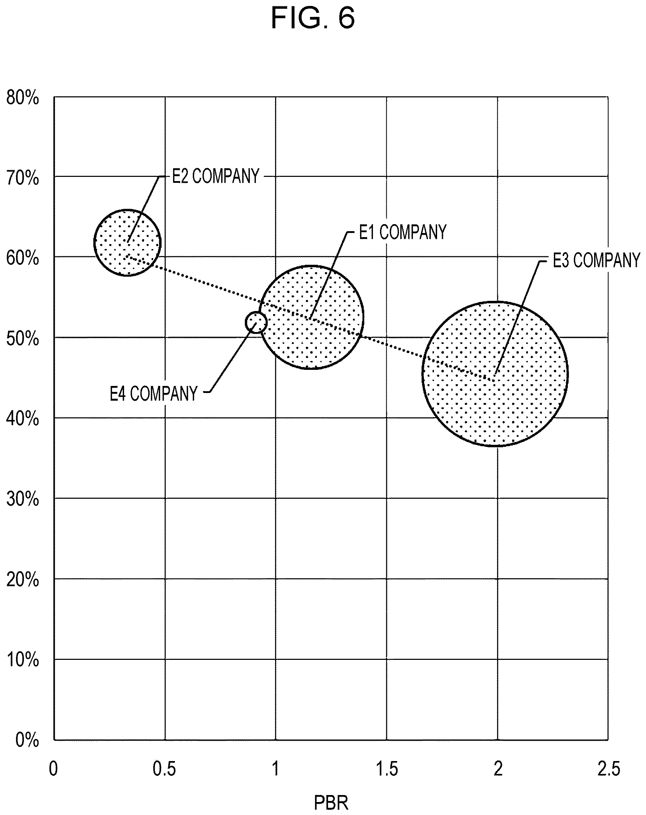

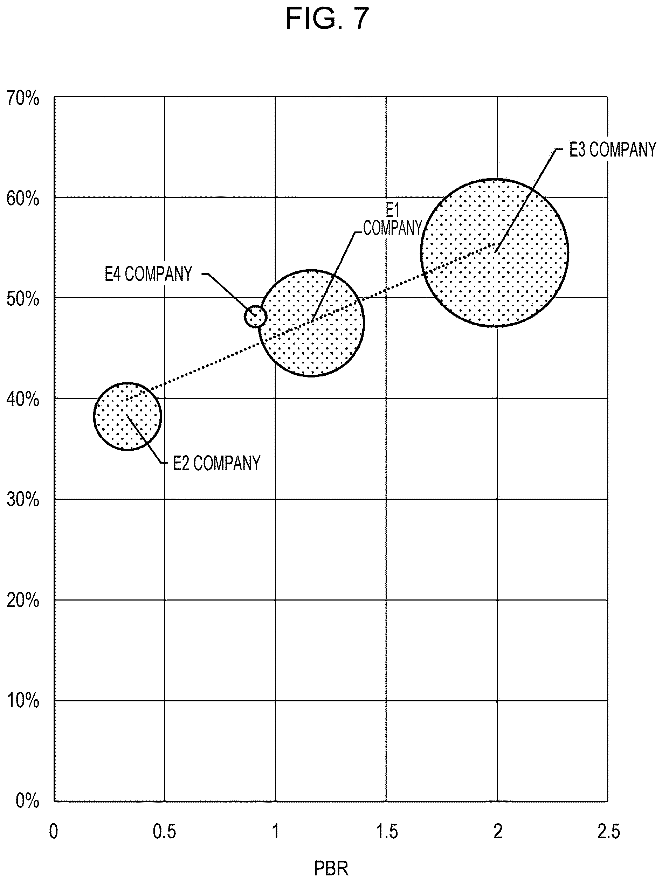

(5) Fifth Example of Analysis Results (Figs. 6 and 7)

A fifth example of analysis results illustrated in Fig. 6 is obtained when three companies E1 to E3 in the agricultural machinery industry are determined as target companies and the predetermined period of time is eight years. Furthermore, the fifth example of analysis results illustrated in Fig. 7 is obtained when four companies E1 to E4 in the agricultural machinery industry are determined as target companies and the predetermined period of time is eight years ago or earlier.
In the analysis results illustrated in Fig. 6, a correlation coefficient is -0.95. On the other hand, in the analysis results illustrated in Fig. 7, a correlation coefficient is 0.95. That is, the analysis results illustrated in Figs. 6 and 7 indicate that "the correlation between the ratio of the number of patent applications in the predetermined period of time to the number of valid patent applications and PBR can change depending on a period of analysis" even when companies in the same industry are determined as target companies. Furthermore, the analysis results illustrated in Figs. 6 and 7 also suggest that it is significant to conduct the analysis a plurality of times with different predetermined periods of time when the target companies belong to an industry that shows different trends depending on a condition of the analysis, such as the agricultural machinery industry.

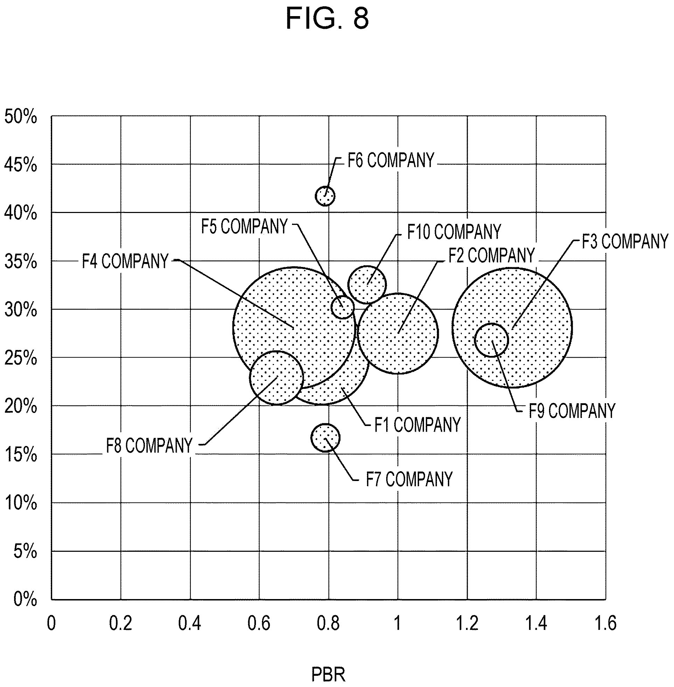

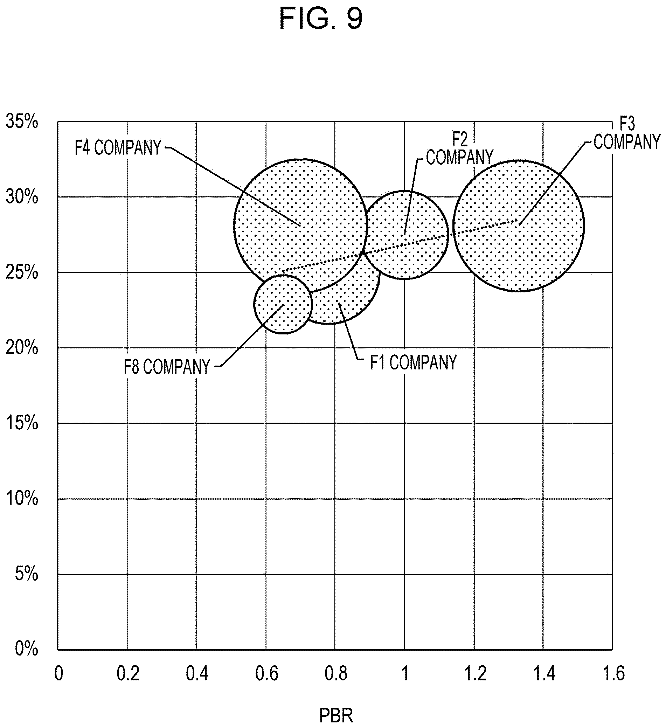

(6) Sixth Example of Analysis Results (Figs. 8 and 9)

A sixth example of analysis results illustrated in Fig. 8 is obtained when 10 companies F1 to F10 in the rubber industry are determined as target companies and the predetermined period of time is five years. Furthermore, the sixth example of analysis results illustrated in Fig. 9 is obtained when the five companies F1 to F4 and F8 in the rubber industry are determined as target companies and the predetermined period of time is five years. The example illustrated in Fig. 9 is obtained when companies having 1000 or more patent applications are filtered out from the 10 companies illustrated in Fig. 8, and the filtered companies are determined as target companies.
In the analysis results illustrated in Fig. 8, a correlation coefficient is 0.06. On the other hand, in the analysis results illustrated in Fig. 9, a correlation coefficient is 0.60. That is, the analysis results illustrated in Figs. 8 and 9 indicate that "the correlation between the ratio of the number of patent applications in the predetermined period of time to the number of valid patent applications and PBR can change depending on filtering of target companies" even when companies in the same industry are determined as the target companies. As illustrated in the sixth example of analysis results, the information processing apparatus can analyze the relationship between PBR and a patent portfolio in the predetermined period of time for the filtered companies serving as the target companies.
Note that, in the sixth example of the analysis results, the target companies are filtered by the numbers of patent applications (or the number of patents) of the companies. However, as illustrated, for example, in a seventh example below, the filtering of target companies according to this embodiment is not limited to filtering by the number of patent applications (or the number of patents) of the companies.

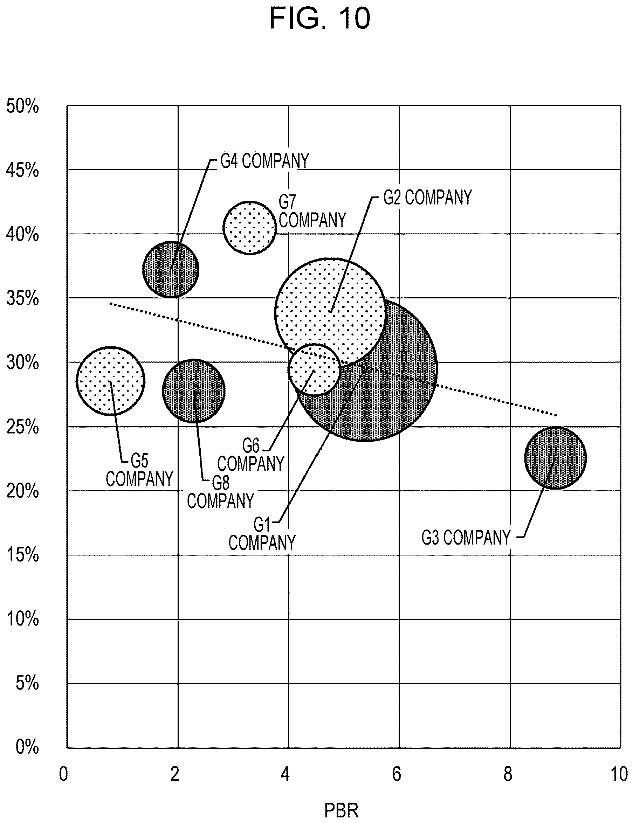

(7) Seventh Example of Analysis Results (Fig. 10, Fig. 11, and Fig. 12)

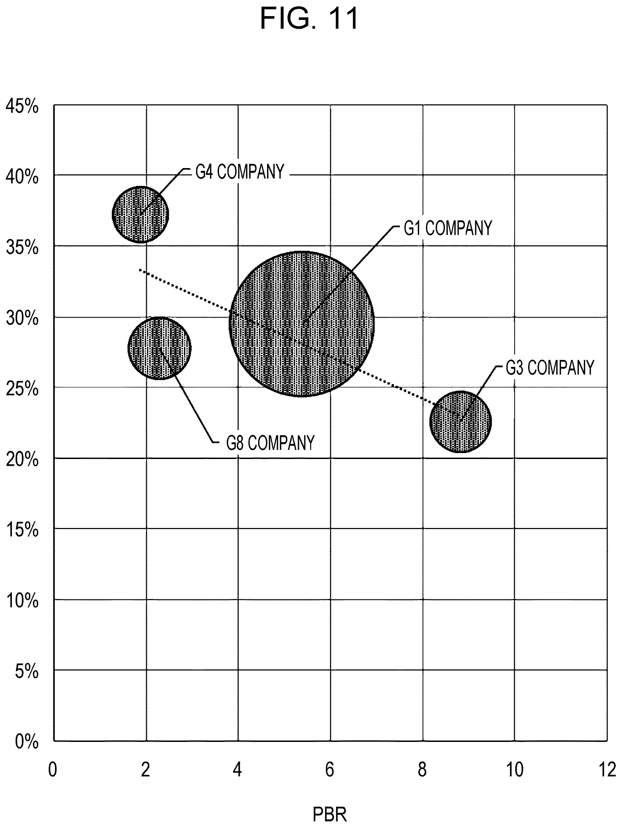

A seventh example of the analysis results illustrated in Fig. 10 is obtained when eight companies G1 to G8 in the medical products industry are target companies and the predetermined period of time is five years. Furthermore, the seventh example of analysis results illustrated in Fig. 11 is obtained when four companies G1, G3, G4, and G8 in the medical products industry are target companies and the predetermined period of time is five years. In the example illustrated in Fig. 11, companies that are listed on stock exchanges in New York, Switzerland, Paris, and London are filtered out from the eight companies illustrated in Fig. 10, and the filtered companies are determined as the target companies.
As illustrated in Figs. 10 and 11, the analysis results indicate that "the correlation between the ratio of the number of patent applications in the predetermined period of time to the number of valid patent applications and PBR can change depending on filtering of target companies", even when companies in the same industry are determined as the target companies. As illustrated in the seventh example of analysis results, the information processing apparatus can analyze the relationship between PBR and the patent portfolio in the predetermined period of time for the filtered companies serving as the target companies. Note that the examples of filtering of target companies are not limited to those illustrated in the sixth example of analysis results and the seventh example of analysis results. For example, the information processing apparatus of this embodiment can filter companies under any condition that can filter companies.

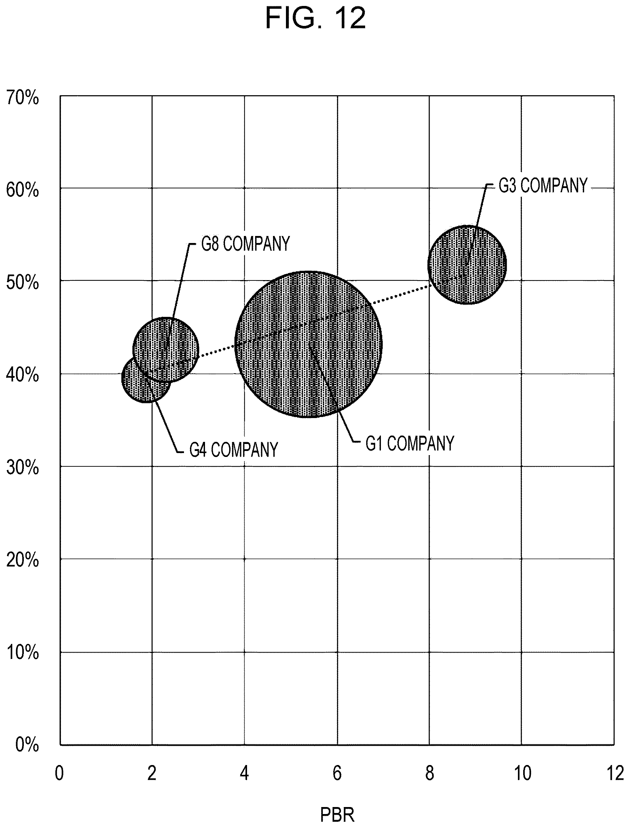

Furthermore, the seventh example of analysis results illustrated in Fig. 12 is obtained when four companies (G1, G3, G4, and G8) in the medical products industry are target companies and the predetermined period of time is 10 years ago or earlier. The example illustrated in Fig. 12 is "an example in which companies filtered under the same condition as the example illustrated in Fig. 11 are selected as target companies, and the predetermined time period is changed from the example illustrated in Fig. 10".

In the analysis results illustrated in Fig. 10, a correlation coefficient is -0.47, and also in the analysis results illustrated in Fig. 11 where the target companies are filtered out, a negative correlation can be seen. On the other hand, in the analysis results illustrated in Fig. 12, a positive correlation with a correlation coefficient of 0.94 is obtained. That is, the analysis results illustrated in Figs. 10, 11, and 12 indicate that "the correlation between the ratio of the number of patent applications in the predetermined period of time to the number of valid patent applications and PBR can change depending on a period of analysis" even when companies in the same industry are determined as target companies.

By performing processing based on information on a price book-value ratio and information on patents of a company, the information processing apparatus of this embodiment acquires analysis results, such as the examples illustrated in Figs. 2 to 12. When a plurality of target companies are set, for example, as in the examples illustrated in Figs. 2 to 12, the analysis results are expressed in a manner that enables comparison of the relationships between a price book-value ratio (PBR) and the patent portfolio for the individual target companies. Note that it is apparent that examples of the analysis results of this embodiment are not limited to those illustrated in Figs. 2 to 12.

Referring again to Fig. 1, an example of a process related to the information processing method of this embodiment will be described. The information processing apparatus of this embodiment outputs an analysis result of the relationship between a price book-value ratio (PBR) and a patent portfolio in a predetermined period of time (S102: Output control process). In other words, the information processing apparatus of this embodiment outputs an analysis result of step S100.

The information processing apparatus of this embodiment, for example, displays the analysis result on a display screen. This information processing apparatus of this embodiment displays the analysis result on the display screen by transmitting a control signal that includes data indicating the analysis result and display an instruction for displaying the analysis result to a display device capable of displaying images on the display screen (first example of output control process: display control process).

The display device of this embodiment may be included in the information processing apparatus of this embodiment, or may be external to the information processing apparatus of this embodiment. When displaying the analysis result on the display screen of the external display device, the information processing apparatus of this embodiment communicates with the external display device via a network (or directly), for example. The communication with the external display device is performed, for example, via a communication interface described below.

Note that the processing in step S102 is not limited to the example illustrated above. For example, the information processing apparatus of this embodiment may transmit data indicating the analysis result (second example of output control process: transmission control process). The information processing apparatus of this embodiment controls a communication interface described below, for example, to transmit data indicating the analysis result via the communication interface.

A transmission destination of the data indicating the analysis result in the process in step S102 can be any device, for example, a recording medium capable of storing the data indicating the analysis result or a processing device capable of processing the data indicating the analysis result. Note that the transmission destination of the data indicating the analysis result in the process of step S102 is not limited to the example illustrated above. For example, the information processing apparatus of this embodiment may transmit the data indicating the analysis result to any program capable of processing the data indicating the analysis result. By transmitting the data indicating the analysis result to the program, for example, link with functions of the program is enabled, and as a result, a range of use of the analysis result is expanded.

Furthermore, the information processing apparatus may perform both the display control process and the transmission control process as the process in step S102 (third example of output control process).

The information processing apparatus of this embodiment performs the process illustrated in Fig. 1, for example, as a process related to the information processing method of this embodiment. By performing the process illustrated in Fig. 1, companies can be analyzed as illustrated in Figs. 2 to 12.

Note that the process related to the information processing method of this embodiment is not limited to the example illustrated in Fig. 1. For example, the information processing apparatus of this embodiment may further perform one or both of the following (I) acquisition process and the following (II) filtering process.

(I) Acquisition Process

For example, the information processing apparatus of this embodiment acquires one or both of the information on a price book-value ratio and the information on patents (acquisition process). Here, as the acquisition process of acquiring the information on a price book-value ratio, for example, the process described above for acquiring the information on a price book-value ratio may be employed. Furthermore, as the acquisition process of acquiring information on patents, for example, the process for the method of acquiring information on patents described above may be employed.

When the acquisition process is performed as a process related to the information processing method of this embodiment, the information processing apparatus of this embodiment performs the process in step S100 using the information acquired by the acquisition process.

(II) Filtering Process

The information processing apparatus of this embodiment filters companies serving as target companies (filtering process). Here, a filtering condition in the filtering process may be any condition that allows companies to be filtered, as described above. Furthermore, the filtering condition is set, for example, by one or both of an operation input device included in the information processing apparatus of this embodiment and an operation input device external to the information processing apparatus of this embodiment.

When the filtering process is performed as a process related to the information processing method of this embodiment, the information processing apparatus of this embodiment performs the process in step S100 with the filtered companies as target companies.

The information processing apparatus performs one of the following processes (a) to (d), for example, as the process related to the information processing method of this embodiment.

    (a) Analysis process and output control process
    (b) Analysis process, output control process, and acquisition process
    (c) Analysis process, output control process, and filtering process
    (d) Analysis process, output control process, acquisition process, and filtering process

Note that the individual processes illustrated in (a) to (d) above are obtained by dividing the process related to the information processing method of this embodiment for the sake of convenience. In other words, a method for dividing the process related to the information processing method of this embodiment is not limited to the method for division into the processes illustrated in (a) to (d) above. For example, each of the processes illustrated in (a) to (d) above may be further subdivided (by any dividing method).

Information Processing Apparatus in This Embodiment

Next, an example of a configuration of the information processing apparatus of this embodiment capable of performing the process related to the information processing method of this embodiment described above will be described.

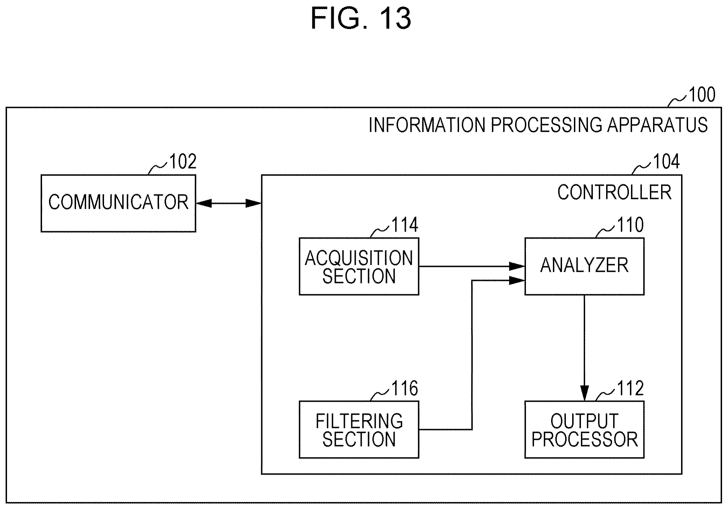

Fig. 13 is a block diagram illustrating an example of a configuration of an information processing apparatus 100 according to this embodiment. The information processing apparatus 100 includes, for example, a communicator 102 and a controller 104.

The information processing apparatus 100 may further include, for example, a read only memory (ROM, not illustrated), a random access memory (RAM, not illustrated), a storage (not illustrated), a user-operable operation section (not illustrated), a display (not illustrated) that displays various screens, such as a screen showing an analysis result, on a display screen. In the information processing apparatus 100, for example, the individual components are connected to one another by means of a bus serving as a data transmission path.

The ROM (not illustrated) stores programs, calculation parameters, and other control data to be used by the controller 104. The RAM (not illustrated) temporarily stores programs and so on to be executed by the controller 104.

The storage (not illustrated) is a storage section included in the information processing apparatus 100, and stores various data, such as data related to the information processing method of this embodiment including information on a price book-value ratio and information on patents, as well as various applications. Here, examples of the storage (not illustrated) include a magnetic recording medium, such as a hard disk, a nonvolatile memory, such as a flash memory, and a solid state drive (SSD) employing a flash memory. Furthermore, the storage (not illustrated) may be detachable from the information processing apparatus 100.

Examples of the controller (not illustrated) include an operation input device described below. Moreover, examples of the display (not illustrated) include a display device described below.

Example of Hardware Configuration of Information Processing Apparatus 100

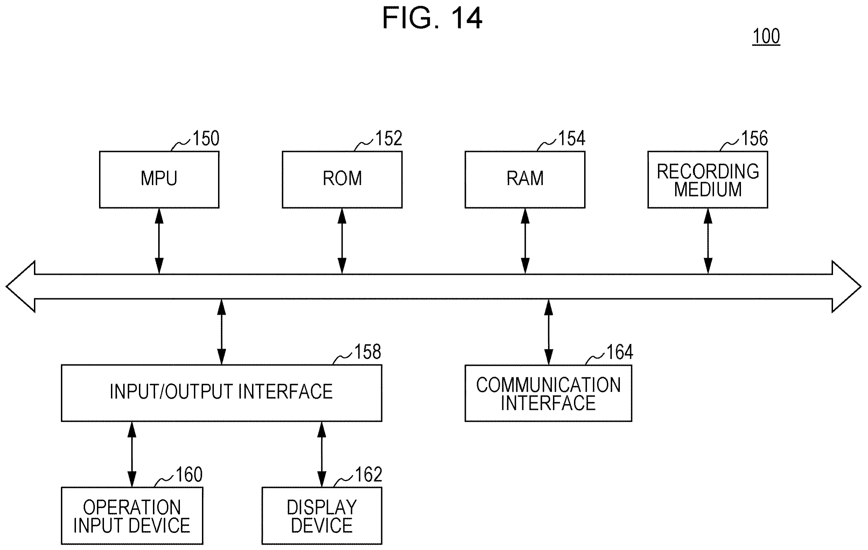

Fig. 14 is a block diagram illustrating an example of a hardware configuration of the information processing apparatus 100 according to this embodiment. The information processing apparatus 100 includes, for example, an MPU 150, a ROM 152, a RAM 154, a recording medium 156, an input/output interface 158, an operation input device 160, a display device 162, and a communication interface 164. Furthermore, in the information processing apparatus 100, for example, the individual components are connected to one another by means of a bus serving as a data transmission path.

The MPU 150 is configured by at least one processor composed of an arithmetic circuit, such as a micro processing unit (MPU), and various processing circuits, for example, and functions as the controller 104 that controls the entire information processing apparatus 100. Furthermore, the MPU 150 serves, for example, as an analyzer 110, an output processor 112, an acquisition section 114, and a filtering section 116 described below in the information processing apparatus 100. Note that some or all of the analyzer 110, the output processor 112, the acquisition section 114, and the filtering section 116 described below may be composed of a dedicated (or general-purpose) circuit (e.g., a processor separate from the MPU 150) that can realize processes of the individual sections described below.

The ROM 152 stores programs, calculation parameters, and other control data to be used by the MPU 150. The RAM 154 temporarily stores programs and so on to be executed by the MPU 150, for example.

The recording medium 156 functions as a storage (not illustrated) and stores various data including data pertaining to the information processing method of this embodiment, such as information on a price book-value ratio and information on patents, as well as various applications. Here, examples of the recording medium 156 include a magnetic recording medium, such as a hard disk, and a nonvolatile memory, such as a flash memory. Furthermore, the recording medium 156 may be detachable from the information processing apparatus 100.

The input/output interface 158 is connected to the operation input device 160 and the display device 162, for example. The operation input device 160 functions as an operation section (not illustrated), and the display device 162 functions as a display (not illustrated). Here, examples of the input/output interface 158 include a universal serial bus (USB) terminal, a digital visual interface (DVI) terminal, a High-Definition Multimedia Interface (HDMI) (registered trademark) terminal, and various processing circuits.

Furthermore, the operation input device 160, is disposed on the information processing apparatus 100, for example, and is connected to the input/output interface 158 inside the information processing apparatus 100. Examples of the operation input device 160 include a button, a directional key, an electrostatic switch, and a combination of these devices.

Furthermore, the display device 162, is disposed on the information processing apparatus 100, for example, and is connected to the input/output interface 158 inside the information processing apparatus 100. Examples of the display device 162 include a liquid crystal display (LCD) and an organic electroluminescence display (organic EL display or an organic light emitting diode display (OLED display)).

Note that it is apparent that the input/output interface 158 can also be connected to an external device, such as an operation input device (e.g., keyboard and mouse) and an external display device external to the information processing apparatus 100. Furthermore, the display device 162 may be a device capable of performing display and allowing a user operation, such as a touch panel.

The communication interface 164 is a communication section included in the information processing apparatus 100 and functions as the communicator 102 for wireless or wired communication with external devices via a network (or directly). Here, examples of the external devices include, but are not limited to, servers capable of transmitting information on a price book-value ratio and servers capable of transmitting information on patents. Examples of the communication interface 164 include a communication antenna and RF (Radio Frequency) circuit (wireless communication), an IEEE 802.15.1 port and transmitter/receiver circuit (wireless communication), an IEEE 802.11 port and transmitter/receiver circuit (wireless communication), and a LAN terminal and transmitter/receiver circuit (wired communication).

The information processing apparatus 100, for example, performs a process related to the information processing method according to this embodiment with the configuration illustrated in Fig. 14. Note that a hardware configuration of the information processing apparatus 100 of this embodiment is not limited to the configuration illustrated in Fig. 14.

For example, the information processing apparatus 100 may not include the communication interface 164 when communicating with external devices, etc. via a connected external communication device, or when being configured to perform processing in a stand-alone manner. Furthermore, the communication interface 164 may be configured to communicate with external devices by a plurality of communication methods.

Furthermore, the information processing apparatus 100 can be configured, for example, without some or all of the recording medium 156, the operation input device 160, and the display device 162.

Furthermore, for example, the configuration illustrated in Fig. 14 (or the configuration for the above modification) may be realized with at least one integrated circuit (IC).

Referring again to Fig. 13, an example of the configuration of the information processing apparatus 100 will be described. The communicator 102 is a communication section included in the information processing apparatus 100 and communicates with external devices via a network (or directly) in a wireless or wired manner. Furthermore, communication of the communicator 102 is controlled by the controller 104, for example.

Here, examples of the communicator 102 include a communication antenna and RF circuit, and a LAN terminal and transmitter/receiver circuit, but a configuration of the communicator 102 is not limited to the above. For example, the communicator 102 may be configured to support any standard capable of communication, such as a USB terminal and transmitter/receiver circuit, or any configuration capable of communicating with external devices via a network. Furthermore, the communicator 102 may be configured to communicate with external devices by a plurality of communication methods.

The controller 104 is composed of, for example, an MPU and serves to control the entire information processing apparatus 100. Furthermore, the controller 104, for example, has the analyzer 110, the output processor 112, the acquisition section 114, and the filtering section 116, and serves to lead the process related to this information processing method.

The analyzer 110 plays a leading role in the analysis process described above, and analyzes the relationship between PBR and a patent portfolio in a predetermined period of time for a target company based on information on a price book-value ratio of the company and information on patents of the company. The analyzer 110 performs the process in step S100 in Fig. 1 as the analysis process, for example.

The output processor 112 plays a leading role in the output control process described above, and causes the analyzer 110 to output an analysis result of the relationship between PBR and a patent portfolio in a predetermined period of time. The output processor 112 performs, for example, the process in step S102 in Fig. 1 to output an analysis result in step S100. Examples of the output control process performed by the output processor 112 include one or both of a display control process to display an analysis result on the display screen and a transmission control process to transmit data indicating an analysis result to an external device (or external program).

The acquisition section 114 plays a leading role in the acquisition process illustrated in (I) above, and acquires one or both of the information on a price book-value ratio and the information on patents. When one or both of the information on a price book-value ratio and the information on patents are acquired by the acquisition section 114, the analyzer 110 performs the analysis process using the acquired information.

The filtering section 116 plays a leading role in the filtering process illustrated in (II) above, and performs filtering of companies that are the target companies. When target companies are filtered, the analyzer 110 performs the analysis process with the filtered companies as target companies.

The controller 104 includes the analyzer 110, the output processor 112, the acquisition section 114, and the filtering section 116, and takes the lead in a process related to the information processing method of this embodiment.

Note that a configuration of the controller 104 of this embodiment is not limited to the example illustrated above. For example, the controller 104 may not have one or both of the acquisition section 114 and the filtering section 116. In other words, the controller 104 may be configured in this embodiment such that one or both of the acquisition process illustrated in (I) above performed by the acquisition section 114 and the filtering process illustrated in (II) above performed by the filtering section 116 are not performed. Even when the acquisition process illustrated in (I) above and the filtering process illustrated in (II) above are not performed, the information processing apparatus 100 can still analyze companies.

The information processing apparatus 100, for example, performs any of the processes illustrated in (a) to (d) above, for example, as a process related to the information processing method of this embodiment, with the configuration illustrated in Fig. 13 (or the configuration of the controller 104 according to the modification above).

Therefore, the information processing apparatus 100 can analyze companies, for example, with the configuration illustrated in Fig. 13.

Furthermore, the configuration illustrated in Fig. 13, for example, enables the information processing apparatus 100 to achieve the effects that are achieved by the process related to the information processing method of this embodiment as described above.

Note that the configuration of the information processing apparatus of this embodiment is not limited to that illustrated in Fig. 13.

For example, the information processing apparatus of this embodiment may include some or all of the analyzer 110, the output processor 112, the acquisition section 114, and the filtering section 116 illustrated in Fig. 13 separately from the controller 104 (e.g., realized in a separate processing circuit).

Furthermore, the individual processes illustrated in (a) to (d) above according to the information processing method of this embodiment are obtained by dividing the process related to the information processing method of this embodiment for the sake of convenience. Therefore, the configuration for realizing the process related to the information processing method of this embodiment is not limited to the example illustrated in Fig. 13 (or example according to the modification described above), but can be depending on the division of the process related to the information processing method of this embodiment.

For example, when communicating with an external device via an external communication device having the same functions and the same configuration as the communicator 102, or when performing processing on a stand-alone basis, the information processing apparatus 100 of this embodiment may not include the communicator 102.

Furthermore, as mentioned above, the information processing apparatus 100 may include, for example, some or all of a storage (not illustrated), an operation section (not illustrated), and a display (not illustrated) that displays various screens, such as a screen showing analysis results, on a display screen.

The above description refers to the information processing apparatus as the embodiment, but this embodiment is not limited to such forms. This embodiment may be applied to a variety of devices that can perform a process related to the information processing method of this embodiment, including, for example, computers, such as personal computers (PCs) and servers, tablet-type devices, and communication devices, such as cell phones and smart phones. Furthermore, this embodiment may also be applied to processing ICs, for example, that can be incorporated into devices, such as those described above.

Furthermore, the information processing apparatus of this embodiment may be applied to a system including a plurality of devices, such as cloud computing, for example, which assumes a connection to a network (or communication among devices). That is, the information processing apparatus of this embodiment described above may be realized, for example, as an information processing system in which a plurality of devices perform a process related to the information processing method according to this embodiment. Examples of the information processing system in which processing according to the information processing method of this embodiment is performed by a plurality of devices include a system in which any of the processes illustrated in (a) to (d) above is performed in coordination by a plurality of devices configuring the information processing system.

Program of This Embodiment

A program for causing a computer system to function as an information processing apparatus of this embodiment (e.g., a program capable of executing a process for the information processing method of this embodiment, such as any of the processes illustrated in (a) to (d) above) is executed in the computer system by a processor or the like to analyze companies. Here, the computer system of this embodiment may be a single computer or a plurality of computers. The series of processes according to the information processing method of this embodiment is performed by the computer system of this embodiment.

In addition, when a program for causing a computer system to function as the information processing apparatus of this embodiment is executed by a processor or the like in the computer system, the effects produced by the process related to the information processing method of this embodiment described above can be achieved.

Furthermore, the program of this embodiment may be called by another program (so-called external program). When being called by another program, the program of this embodiment outputs analysis results to the other program. In this case, examples of the program of this embodiment include a module, a plug-in, and an application programming interface (API). For example, when the program is linked to other program in this way, a range of use of an analysis result will be expanded and the versatility of the program will be further enhanced.

The above is a detailed description of the preferred embodiment of the present disclosure with reference to the accompanying drawings, but the technical scope of the present disclosure is not limited to such examples. It is clear that those who skilled in the art of the present disclosure can conceive of various examples of changes or modifications within the scope of the technical ideas described in the claims, and it is understood that these also naturally fall within the technical scope of the present disclosure.

For example, the above indicates that a program (computer program) for causing a computer system to function as the information processing apparatus of this embodiment is provided, but this embodiment can also provide a recording medium (a recording medium readable by a computer system, etc.) which stores the above program (computer readable recording medium).

The configuration described above is an example of this embodiment and naturally belongs to the technical scope of the present disclosure.

Furthermore, the effects described in this specification are illustrative or exemplary only and not limiting. In other words, the technology of the present disclosure may produce other effects that are obvious to those skilled in the art from the description herein, in addition to or instead of the above effects.

The following configurations are also within the technical scope of the present disclosure.

(1) An information processing apparatus, comprising:

an analyzer that analyzes the relationship between a price book-value ratio and a patent portfolio for a processing target company in a predetermined period of time based on information on the price book-value ratio of the company and information on patents of the company; and
an output processor that outputs an analysis result of the relationship.

(2) The information processing apparatus according to (1), wherein the analysis result is represented by a graph in which a ratio of the number of patent applications in a predetermined period of time to the number of valid patent applications and a price book-value ratio is expressed on two axes, or a graph in which a ratio of the number of patents in a predetermined period of time to the number of valid patents and a price book-value ratio is expressed on two axes.

(3) The information processing apparatus according to (1) or (2), wherein a plurality of the target companies are set, and

the analysis results are expressed in a manner that allows comparison of the relationships in the individual target companies.

(4) The information processing apparatus according to any one of (1) to (3), wherein the output processor displays the analysis result on a display screen.

(5) The information processing apparatus according to any one of (1) to (4), wherein the output processor transmits data indicating the analysis result.

(6) The information processing apparatus according to any one of (1) to (5), wherein the predetermined period of time is one of a predetermined fixed period of time, a variable period of time set by the user, or a period of time set in accordance with information on a price book-value ratio.

(7) The information processing apparatus according to any one of (1) to (6), further comprising:

a filtering section that filters a company serving as a target company, wherein
the analyzer analyzes the relationship in the predetermined period of time with the filtered company as a target company.

(8) The information processing apparatus according to any one of (1) to (7), further comprising an acquisition section that acquires one or both of the information on a price book-value ratio and the information on patents.

(9) An information processing method, comprising:

analyzing the relationship between a price book-value ratio and a patent portfolio for a processing target company in a predetermined period of time based on information on the price book-value ratio of the company and information on patents of the company; and
outputting an analysis result of the relationship.

(10) A recording medium storing a program that causes a computer to realize:

a function of analyzing the relationship between a price book-value ratio and a patent portfolio for a processing target company in a predetermined period of time based on information on a price book-value ratio of the company and information on patents of the company; and
a function of outputting the analysis results of the above relationship.

**Claims**

1. An information processing apparatus (100), comprising:

   an analyzer (110) that analyzes a relationship between a price book-value ratio and a patent portfolio for a processing target company in a predetermined period of time based on information on the price book-value ratio of the company and information on patents of the company; and
   an output processor (112) that outputs an analysis result of the relationship.

2. The information processing apparatus according to Claim 1, wherein the analysis result is represented by a graph in which a ratio of the number of patent applications in a predetermined period of time to the number of valid patent applications and a price book-value ratio is expressed on two axes, or a graph in which a ratio of the number of patents in a predetermined period of time to the number of valid patents and a price book-value ratio is expressed on two axes.

3. The information processing apparatus according to Claim 2, wherein

   a plurality of the target companies are set, and
   the analysis results are expressed in a manner that allows comparison of the relationships in the individual target companies.

4. The information processing apparatus according to Claim 2, wherein the output processor displays the analysis result on a display screen.

5. The information processing apparatus according to Claim 2, wherein the output processor transmits data indicating the analysis result.

6. The information processing apparatus according to Claim 2, wherein the predetermined period of time is one of a predetermined fixed period of time, a variable period of time set by the user, or a period of time set in accordance with information on a price book-value ratio.

7. The information processing apparatus according to Claim 2, further comprising:

   a filtering section (116) that filters a company serving as a target company, wherein
   the analyzer analyzes the relationship in the predetermined period of time with the filtered company as a target company.

8. The information processing apparatus according to Claim 2, further comprising an acquisition section (114) that acquires one or both of the information on a price book-value ratio and the information on patents.

9. An information processing method comprising:

   analyzing the relationship between a price book-value ratio and a patent portfolio for a processing target company in a predetermined period of time based on information on the price book-value ratio of the company and information on patents of the company; and
   outputting an analysis result of the relationship.

10. A recording medium storing a program that causes a computer to realize:

   a function of analyzing the relationship between a price book-value ratio and a patent portfolio for a processing target company in a predetermined period of time based on information on a price book-value ratio of the company and information on patents of the company; and
   a function of outputting the analysis results of the above relationship.

# FIG. 1

```
          START
            │
            ▼
┌───────────────────────────────────────────────┐  ⌐S100
│ ANALYZE RELATIONSHIP BETWEEN PBR AND PATENT    │
│ PORTFOLIO OF PROCESSING TARGET COMPANY IN      │
│ PREDETERMINED PERIOD OF TIME BASED ON          │
│ INFORMATION ON PBR AND INFORMATION ON PATENTS  │
└───────────────────────────────────────────────┘
            │
            ▼
┌───────────────────────────────────────────────┐  ⌐S102
│ OUTPUT RESULT OF ANALYSIS OF RELATIONSHIP      │
│ BETWEEN PBR AND PATENT PORTFOLIO IN            │
│ PREDETERMINED PERIOD OF TIME                   │
└───────────────────────────────────────────────┘
            │
            ▼
           END
```

# FIG. 2

# FIG. 3

# FIG. 4

# FIG. 5

# FIG. 6

# FIG. 7

# FIG. 8

# FIG. 9

# FIG. 10

# FIG. 11

# FIG. 12

## FIG. 13

INFORMATION PROCESSING APPARATUS ~100

COMMUNICATOR ~102

CONTROLLER ~104

ACQUISITION SECTION ~114

ANALYZER ~110

FILTERING SECTION ~116

OUTPUT PROCESSOR ~112

EP 4 668 196 A1

# FIG. 14

100

```
  ┌─────────┐    ┌─────────┐    ┌─────────┐    ┌───────────┐
  │   ~150  │    │   ~152  │    │   ~154  │    │    ~156   │
  │   MPU   │    │   ROM   │    │   RAM   │    │ RECORDING │
  │         │    │         │    │         │    │  MEDIUM   │
  └─────────┘    └─────────┘    └─────────┘    └───────────┘
```

INPUT/OUTPUT INTERFACE ~158

COMMUNICATION INTERFACE ~164

OPERATION INPUT DEVICE ~160

DISPLAY DEVICE ~162

EP 4 668 196 A1

| | Europäisches Patentamt European Patent Office Office européen des brevets | **EUROPEAN SEARCH REPORT** | **Application Number** EP 25 18 1296 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 688 874 A1 (INTELLECTUAL PROPERTY BANK [JP]) 9 August 2006 (2006-08-09)<br>* paragraph [0040]; figures 5-6, 12-16, 21 *<br>* paragraph [0136] - paragraph [0188] *<br>----- | 1-10 | INV.<br>G06Q40/06<br>G06Q50/18 |

| | | | TECHNICAL FIELDS SEARCHED (IPC) |
|---|---|---|---|
| | | | G06Q |

The present search report has been drawn up for all claims

| Place of search | Date of completion of the search | Examiner |
|---|---|---|
| The Hague | 31 July 2025 | van Praagh, Kay |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 1296

31-07-2025

| Patent document cited in search report | Publication date | Patent family member(s) | Publication date |
|---|---|---|---|
| EP 1688874 A1 | 09-08-2006 | AU 2004284619 A1 | 06-05-2005 |
| | | CA 2543598 A1 | 06-05-2005 |
| | | EP 1688874 A1 | 09-08-2006 |
| | | IS 8455 A | 11-05-2006 |
| | | JP 4018719 B2 | 05-12-2007 |
| | | JP WO2005041094 A1 | 29-03-2007 |
| | | KR 20060100377 A | 20-09-2006 |
| | | US 2007094291 A1 | 26-04-2007 |
| | | WO 2005041094 A1 | 06-05-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002015108 A